# FASCICULE DE BREVET EUROPEEN

(11) **EP 3 185 386 B1**
(45) Date de publication et mention de la délivrance du brevet: **11.10.2023**
(21) Numéro de dépôt: 16206504.9
(22) Date de dépôt: 22.12.2016
(51) Int. Cl.: H02J 3/38, H02J 3/48, H02J 3/50

(54) **PROCEDE DE CONTROLE D'UN MICRO RESEAU DE DISTRIBUTION ELECTRIQUE**
KONTROLLVERFAHREN EINES ELEKTRISCHEN MIKROVERTEILUNGSNETZES
METHOD FOR CONTROLLING A MICRO-NETWORK FOR ELECTRICITY DISTRIBUTION

(30) Priorité: 23.12.2015 FR 1563186
(43) Date de publication de la demande: 28.06.2017
(73) Titulaire: Schneider Electric Industries SAS, 92500 Rueil-Malmaison (FR)
(72) Inventeur: AUBERT GUYON, Caroline, 38050 Grenoble Cedex 9 (FR); DOBROWOLSKI, Jean, 38050 Grenoble Cedex 9 (FR); HERRIOT, Yann, 38050 Grenoble Cedex 9 (FR)
(74) Mandataire: Brevalex

(56) Documents cités:
- WO-A1-2015/102598
- MOHAMMAD S ALOTIBE ET AL: "Simplified voltage and frequency controller based on droop control for the dynamic analysis of a Microgrid", UNIVERSITIES POWER ENGINEERING CONFERENCE (AUPEC), 2012 22ND AUSTRALASIAN, IEEE, 26 septembre 2012 (2012-09-26), pages 1-8, XP032271774, ISBN: 978-1-4673-2933-0
- EVANGELOS RIKOS ET AL: "Stability and Power Quality Issues in Microgrids Under Weather Disturbances", IEEE JOURNAL OF SELECTED TOPICS IN APPLIED EARTH OBSERVATIONS AND REMOTE SENSING, IEEE, USA, vol. 1, no. 3, 1 septembre 2008 (2008-09-01), pages 170-179, XP011241587, ISSN: 1939-1404, DOI: 10.1109/JSTARS.2008.2010557
- SHUAI LU ET AL: "Control strategies for distributed energy resources to maximize the use of wind power in rural microgrids", POWER AND ENERGY SOCIETY GENERAL MEETING, 2011 IEEE, IEEE, 24 juillet 2011 (2011-07-24), pages 1-8, XP032055804, DOI: 10.1109/PES.2011.6039787 ISBN: 978-1-4577-1000-1
- CHENGSHAN WANG ET AL: "Cooperative operation and optimal design for islanded microgrid", INNOVATIVE SMART GRID TECHNOLOGIES (ISGT), 2012 IEEE PES, IEEE, 16 janvier 2012 (2012-01-16), pages 1-8, XP032205921, DOI: 10.1109/ISGT.2012.6175534 ISBN: 978-1-4577-2158-8
- NEMATI MOHSEN ET AL: "Frequency and voltage control in microgrids: Modeling and simulations in islanded mode", IEEE PES INNOVATIVE SMART GRID TECHNOLOGIES, EUROPE, IEEE, 12 octobre 2014 (2014-10-12), pages 1-6, XP032730711, DOI: 10.1109/ISGTEUROPE.2014.7028858
- ZHANG DAMING: "Integration of renewable energy generation with conventional diesel-engine powered generation in a microgrid", 2015 IEEE PES ASIA-PACIFIC POWER AND ENERGY ENGINEERING CONFERENCE (APPEEC), IEEE, 15 novembre 2015 (2015-11-15), pages 1-5, XP032848148, DOI: 10.1109/APPEEC.2015.7380985

## Description

### DOMAINE TECHNIQUE

L'invention concerne un procédé de contrôle d'un micro réseau de distribution électrique.

### ÉTAT DE LA TECHNIQUE ANTÉRIEURE

Un micro réseau (« microgrid » selon la terminologie Anglo-Saxonne) est généralement un réseau électrique local destiné à distribuer de l'énergie électrique dans des régions isolées et distantes des grands centres de production d'énergie électrique. Les régions isolées sont par exemples des îles, des régions montagneuses, ou encore des zones désertiques.

Le principal intérêt des micros réseaux est qu'ils fonctionnent de manière autonome (en mode îloté, sans connexion au réseau public), et se trouvent à proximité des zones de consommation (les charges). Ainsi, les pertes inhérentes aux réseaux de distributions longues distances sont limitées.

L'autonomie énergétique du micro réseau est généralement assurée par des sources d'énergies électriques de différents types parmi lesquelles les groupes électrogènes occupent une place importante (nous parlons dans ce cas de source d'énergie synchrone). En effet, du point de vue économique, un groupe électrogène représente un faible investissement de départ, et assure une production en électricité suffisamment flexible pour absorber des pics de consommations aux heures de pointes. Cependant, leur fonctionnement nécessite de grandes quantités de diesel, ce qui alourdit, par conséquent, la facture énergétique, mais augmente également la pollution atmosphérique.

Afin de pallier à ces problèmes économiques et environnementaux, les micro réseaux, sont hybrides, et comprennent également des sources d'énergie renouvelable telles que des sources d'énergie photovoltaïque, éolienne, etc. Les sources d'énergie renouvelable comprennent généralement un système de production d'électricité produisant un signal électrique continu, et un onduleur destiné à convertir le signal électrique continu en signal électrique alternatif avant de le délivrer sur le micro réseau.

Cependant, sans modification du mode de fonctionnement des onduleurs, les sources d'énergie renouvelable ne peuvent former le réseau (elles ne sont pas « Grid Forming » selon la terminologie Anglo-Saxonne), et ne peuvent par conséquent assurer seules la production d'électricité alimentant le réseau.

Pour pallier à cette limitation, les sources d'énergie renouvelable peuvent comprendre un onduleur contrôlé par une loi de commande leur conférant la possibilité de former le réseau. Autrement dit, la source d'énergie renouvelable peut imposer la tension et la fréquence d'un signal électrique à un réseau électrique sans recours à un signal de référence. Cependant, dès lors qu'un surplus de consommation de puissance est requis par la charge du micro réseau, l'onduleur de la source d'énergie renouvelable réagit généralement avant la source d'énergie synchrone, et tente de fournir toute la puissance qu'il produit. Il en résulte alors un déphasage entre les signaux électriques fournis par la source d'énergie renouvelable et par la source d'énergie synchrone, pouvant ainsi générer une défaillance majeure du micro réseau (« Black Out » selon la terminologie Anglo-Saxonne).

En outre, les sources d'énergie renouvelable sont soumises aux aléas climatiques, et par conséquent sont une source d'énergie instable, nous les qualifions alors de sources d'énergies intermittentes.

Ainsi, pour des raisons de stabilité du micro réseau hybride, la part des sources d'énergie renouvelable ne peut excéder une valeur comprise entre 20 et 30 % (nous parlons de taux de pénétration des énergies renouvelables) de sorte qu'au moins un groupe électrogène est en marche en permanence. Ce qui, de fait, limite les économies réalisables.

Ainsi, les micro réseaux hybrides comprenant une part de sources d'énergie renouvelable supérieure à 30 % sont instables. Un but de l'invention est alors de proposer un procédé de contrôle d'un micro réseau hybride permettant d'augmenter la part des sources d'énergie renouvelable sans affecter la stabilité dudit réseau.

Le document "Simplified voltage and frequency controller based on droop control for the dynamic analysis of a Microgrid", MOHAMMAD S ALOTIBE ET AL, UNIVERSITIES POWER ENGINEERING CONFERENCE (AUPEC), 2012 22ND AUSTRALASIAN, IEEE, 26 septembre 2012, pages 1-8, décrit: un procédé de contrôle d'un micro réseau de distribution électrique comprenant au moins une source d'énergie renouvelable, délivrant au micro réseau une première puissance active/ réactive contrôlée par statisme selon une fréquence et une tension du micro réseau respectivement, et adaptée pour fonctionner de manière synchrone et en parallèle avec au moins une source d'énergie synchrone, la source d'énergie synchrone étant adaptée pour produire une seconde puissance active/réactive, également délivrée au micro réseau, selon un critère de démarrage/ interruption automatique, de ladite source d'énergie synchrone, le procédé comprenant le démarrage de la source synchrone dès lors que la fréquence et/ou la tension du micro réseau sont inférieures à, respectivement, une fréquence seuil et/ou une tension seuil, et l'interruption de la source d'énergie synchrone dès lors que la seconde puissance est inférieure à une puissance seuil.

### EXPOSÉ DE L'INVENTION

L'invention concerne un procédé de contrôle selon la revendication 1.

Selon un mode de réalisation, la source d'énergie renouvelable comprend un onduleur adapté pour émuler le fonctionnement d'une source d'énergie synchrone, de sorte que la source d'énergie renouvelable se comporte comme une source d'énergie synchrone.

Selon un mode de réalisation, la fréquence seuil et la tension seuil sont paramétrées dans un programme d'ordinateur contrôlant la source d'énergie synchrone.

Selon un mode de réalisation, le contrôle par statisme en fréquence et en tension est caractérisé, respectivement, par une fréquence à vide f₀ et une tension à vide V₀, la fréquence à vide f₀ et la tension à vide V₀ étant susceptibles d'être comprises, respectivement, dans une gamme de fréquence à vide H_{f0} prédéterminée et une gamme de tension à vide Hᵥ₀ prédéterminées.

Selon un mode de réalisation, la source d'énergie renouvelable comprend une système d'accumulation de puissance comprenant une réserve de puissance active/réactive, ledit système étant destiné à délivrer de la puissance active/réactive au micro réseau.

Selon un mode de réalisation, l'onduleur ajuste la fréquence et/ou la tension du signal délivré au micro réseau en fonction d'une réserve d'énergie et / ou de puissance de la source d'énergie renouvelable. Selon un mode de réalisation, l'onduleur ajuste également la fréquence et / ou la tension du signal délivré au micro réseau en fonction de prévisions météorologique et /ou de prévision de consommation d'énergie.

Selon un mode de réalisation, la fréquence et la tension du micro réseau sont mesurées en permanence par la source d'énergie synchrone.

Selon un mode de réalisation, l'au moins une source d'énergie renouvelable comprend une pluralité d'unités d'énergies renouvelable, la pluralité d'unités d'énergies renouvelable se partageant la production de la première puissance, et fonctionnant de manière synchrone.

Selon un mode de réalisation, la au moins une source d'énergie synchrone comprend une pluralité de sources d'énergie synchrone.

### BRÈVE DESCRIPTION DES DESSINS

D'autres caractéristiques et avantages apparaîtront dans la description qui va suivre des modes de mise en oeuvre du procédé de contrôle d'un micro réseau de distribution électrique selon l'invention, donnés à titre d'exemples non limitatifs, en référence aux dessins annexés dans lesquels :
- la figure 1 est une représentation schématique d'un micro réseau selon l'invention,
- la figure 2a est un graphique représentant la fréquence (selon l'axe vertical) d'un signal électrique fourni par une source d'énergie synchrone en fonction de la puissance active (selon l'axe horizontal) délivrée par ladite source,
- la figure 2b est un graphique représentant la tension (selon l'axe vertical) d'un signal électrique fourni par une source d'énergie synchrone en fonction de la puissance réactive (selon l'axe horizontal) délivrée par ladite source,
- la figure 2c est un graphique représentant la fréquence (selon l'axe vertical) d'un signal électrique fourni par deux sources d'énergie synchrone en fonction de la puissance active (selon l'axe horizontal) délivrée par lesdites sources,
- la figure 3 représente la variation de la fréquence f (sur l'axe vertical) du signal électrique délivré au micro réseau en fonction de la variation de la puissance active (sur l'axe horizontal) délivrée à la charge,
- la figure 4 représente l'évolution de la caractéristique fréquence (axe vertical)/puissance active (axe horizontal) grâce à une action corrective face à une modification du partage de puissance opéré entre les sources, soit pour modifier volontairement la fréquence tout en gardant le même point de fonctionnement en puissance,
- la figure 5a est une illustration de l'ajustement de la fréquence à vide f₀ (donnée sur l'axe vertical de la figure) dans la gamme de fréquences à vide (H_{f0}), la gamme de fréquences à vide (H_{f0}) étant contrainte par la gamme de fréquences prédéterminée (H_{f}) et imposée par l'exploitant du micro réseau,
- la figure 5b, est une illustration de l'ajustement de la tension à vide V₀ (donnée sur l'axe vertical de la figure) dans la gamme de tensions à vide (Hᵥ₀), la gamme de tensions à vide (Hᵥ₀) étant contrainte par la gamme de tensions prédéterminée (Hᵥ) et imposée par l'exploitant du micro réseau.

### EXPOSÉ DÉTAILLÉ DE MODES DE RÉALISATION PARTICULIERS

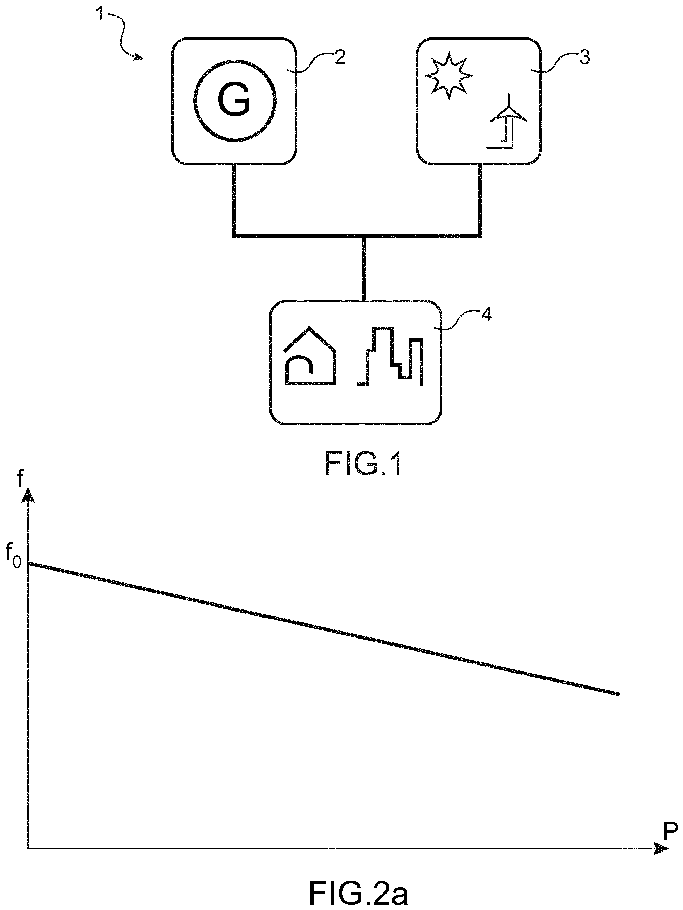

La figure 1 représente un micro réseau 1 de distribution d'électricité selon l'invention.

Un micro réseau 1 de distribution d'électricité peut comprendre des sources de puissances telles que des sources d'énergie renouvelable 3, et des sources d'énergie synchrone 2.

Dans toute la suite de l'exposé, nous assimilons le terme puissance à puissance relative (en pourcentage). C'est-à-dire que nous parlons de la proportion de la puissance fournie par une source (une source d'énergie renouvelable 3 ou une source d'énergie synchrone 2) par rapport à la puissance maximale qu'elle produit.

La source d'énergie renouvelable 3 peut comprendre un système de production d'électricité renouvelable, un système d'accumulation de puissance et un onduleur. Le système de production d'électricité renouvelable peut comprendre des générateurs de puissance solaire (des panneaux photovoltaïques), des générateurs de puissance éolienne (des éoliennes), des générateurs de puissance à turbine hydrolienne (des hydroliennes) qui produisent généralement un signal électrique continu. L'onduleur est adapté pour convertir le signal électrique produit par le système de production d'électricité en un signal électrique alternatif avant de l'injecter sur le micro réseau 1. Le système d'accumulation de puissance peut comprendre un condensateur (ou plus particulièrement un supercondensateur), un volant d'inertie, une batterie électrochimique, etc. Nous entendons par supercondensateur, un condensateur de technique particulière permettant d'obtenir une densité de puissance et une densité d'énergie intermédiaire entre les batteries et les condensateurs électrolytiques classiques. Par exemple, un supercondensateur peut comprendre une densité de puissance comprise entre 1000 et 5000 W/Kg, et une densité d'énergie comprise entre 4 et 6 Wh/Kg.

Les sources d'énergie synchrone 2 comprennent généralement une machine synchrone (un alternateur) qui lorsqu'elle est entraînée en rotation, par un arbre d'un machine tournante, produit un signal électrique (un courant et une tension électriques) alternatif. La machine tournante peut comprendre un moteur diesel, une turbine (à gaz, hydraulique, à vapeur, à air).

Le micro réseau 1 comprend également des charges 4 destinées à consommer, au moins en partie, une puissance délivrée par les sources d'énergie renouvelable 3 et les sources d'énergie synchrone 2.

Afin d'être électriquement connectées ensemble, avantageusement en parallèle, au micro réseau 1, les différentes sources d'énergie doivent être capables de délivrer chacune un signal électrique de même fréquence et de même tension.

A cet égard, prenons l'exemple de la source d'énergie synchrone 2. La source d'énergie synchrone 2 est adaptée pour ajuster la fréquence du signal électrique qu'elle délivre au micro réseau 1 en fonction du la puissance active consommée par ledit micro réseau 1 et générée par la source d'énergie synchrone 2. Ce comportement est illustré à la figure 2a. La fréquence f varie selon une fonction linéaire de la puissance active P, relative (en %), délivrée par la source d'énergie synchrone 2. La fonction linéaire est caractérisée par une pente D et une fréquence à vide f₀. La fréquence à vide f₀ correspond à la fréquence du signal électrique délivré par la source d'énergie synchrone 2 lorsque la charge ne consomme pas de puissance active de ladite source 2. La pente D porte le nom de statisme (« Droop » selon la terminologie Anglo-Saxonne). Nous parlons également d'une puissance contrôlée par statisme selon la fréquence du micro réseau 1.

Grâce à un régulateur de vitesse, la source d'énergie synchrone 2 adapte sa vitesse de rotation (et donc la fréquence du signal électrique délivré au micro réseau) en fonction de la puissance qu'elle délivre.

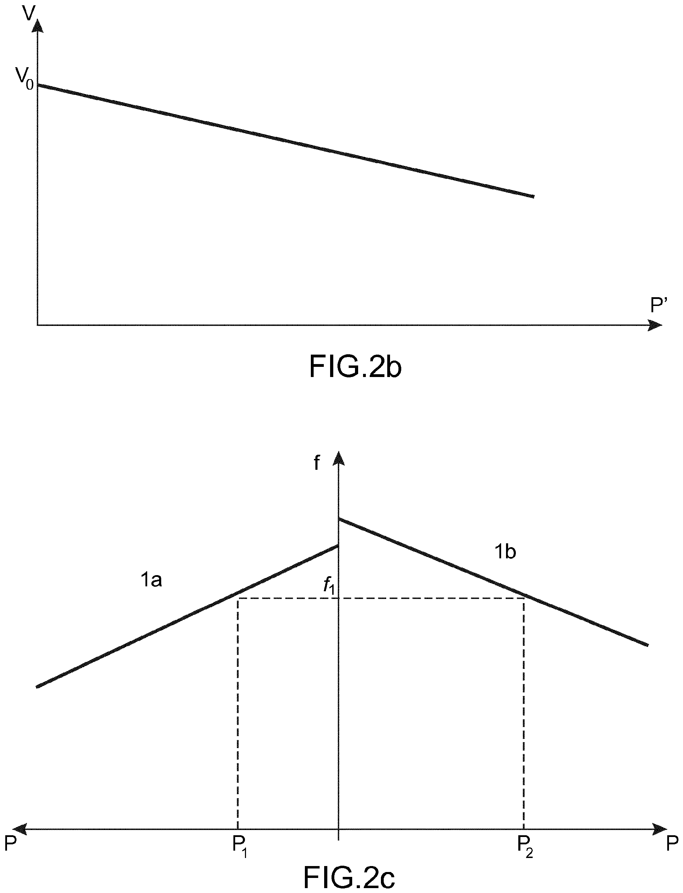

De manière équivalente, la source d'énergie synchrone est adaptée pour ajuster la tension du signal électrique qu'elle délivre au micro réseau en fonction de la puissance réactive consommée par ledit micro réseau 1 et généré par la source d'énergie synchrone 2. Ce comportement est illustré à la figure 2b. La tension V varie selon une fonction linéaire de la puissance réactive P', relative (en %), délivrée par la source d'énergie synchrone 2. La fonction linéaire est caractérisée par une pente D' et une tension à vide V₀.

La tension à vide V₀ correspond à la tension du signal électrique délivré par la source d'énergie synchrone 2 lorsque la charge ne consomme pas de puissance réactive de ladite source 2. La pente D' porte, également, le nom de statisme. Nous parlons également d'une puissance contrôlée par statisme selon la tension du micro réseau 1.

Plusieurs sources d'énergie synchrone 2 contrôlées par statisme selon un même statisme se partagent la charge 4 en proportion de la puissance active/réactive qu'elles sont en mesure de délivrer. Par ailleurs, dans ces conditions, toutes les sources d'énergie synchrone 2 délivrent un signal électrique sensiblement de même fréquence. Par exemple, tel que représenté à la figure 2c, deux sources d'énergie synchrone 1a et 1b peuvent fonctionner en parallèle et délivrer un signal électrique de fréquence f₁, la source 1a et la source 1b alimentent alors chacune le micro réseau 1 avec une puissance active égale à, respectivement, P₁ et P₂.

Le réglage du statisme selon la fréquence (réglage de la pente D) de la source d'énergie synchrone 2 peut être exécuté selon la conception de ladite source, par exemple, par le réglage d'un potentiomètre, ou à l'aide d'une interface électronique (un ordinateur et un logiciel par exemple).

Le réglage du statisme selon la tension (réglage de la pente D') de la source d'énergie synchrone 2 peut être exécuté selon la conception de ladite source, par exemple, par le réglage d'un potentiomètre, ou à l'aide d'une interface électronique (un ordinateur et un logiciel par exemple).

Dans le cadre de la présente invention, la Demanderesse prend le parti de connecter électriquement en parallèle des sources d'énergie renouvelable 3 et des sources d'énergie synchrone 2 pour alimenter un micro réseau 1, et de favoriser la production de la puissance active/réactive électrique produite par les sources d'énergie renouvelable 3 au regard des sources d'énergie synchrone 2.

Selon l'état de la technique, les sources d'énergie renouvelable 3 ne représentent, généralement, qu'une source d'appoint, et méritent par conséquent d'être repensées pour atteindre cet objectif.

Ainsi, selon l'invention, une source d'énergie renouvelable 3 comprend un système de production d'électricité renouvelable. Ledit système de production d'énergie renouvelable 3 peut présenter un caractère intermittent, à savoir produire de l'énergie de manière irrégulière. Le système de production d'énergie renouvelable 3 peut comprendre, par exemple, des panneaux photovoltaïques, des éoliennes, ou encore des hydroliennes. Ces derniers produisent généralement un signal électrique continu qui doit être converti en signal électrique alternatif avant d'être délivré au micro réseau 1. La source d'énergie renouvelable 3 est par conséquent pourvue d'un onduleur (« Inverter » selon la terminologie Anglo-Saxonne) capable d'assurer cette conversion du signal électrique continu en signal électrique alternatif.

De manière particulièrement avantageuse, la source d'énergie renouvelable 3 se comporte comme une source d'énergie synchrone 2. Nous introduisons ainsi le concept de générateur virtuel (« Virtual Generator » selon la terminologie Anglo-Saxonne) connu de l'homme du métier. La source d'énergie renouvelable comprend une loi de commande lui permettant de reproduire le comportement électrique et mécanique d'un générateur synchrone 2, et plus particulièrement un groupe électrogène.

Ainsi, à cet égard, l'onduleur d'une source d'énergie renouvelable 3 est piloté par la loi de commande de sorte que la source d'énergie renouvelable 3 se comporte comme une source d'énergie synchrone 2. Nous parlons également de générateur virtuel (« Virtual Generator » selon la terminologie Anglo-Saxonne).

L'onduleur est, également, assujetti à une loi de commande de manière à conférer un contrôle par statisme à la source d'énergie renouvelable 3 comprenant ledit onduleur. La fréquence et la tension du signal électrique délivré par la source d'énergie renouvelable 3 suivent donc le comportement, respectivement, en puissance active P et réactive P', illustré aux figures 2a et 2b. La loi de commande peut être imposée dans un logiciel, comprenant l'ajustement d'un gain de la fréquence du signal électrique en fonction de la puissance active, et / ou d'un gain de la tension du signal électrique en fonction de la puissance réactive. Les gains précités ne sont autre que les pentes D et D' des fonctions linéaires des figures 2a et 2b.

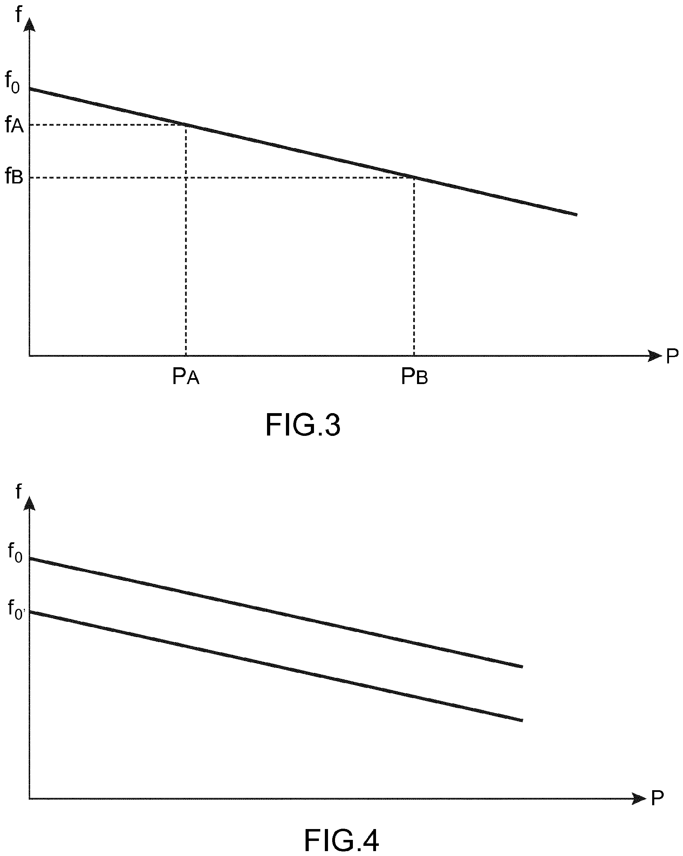

Ainsi, la source d'énergie renouvelable 3 peut adapter la puissance délivrée au micro réseau 1 en ajustant la fréquence du signal électrique. Tel que représenté à la figure 3, à un premier instant, la charge consomme une puissance active P_{A} d'un signal électrique de fréquence f_{A} délivré par la source d'énergie renouvelable 3. A un second instant, un surplus de puissance peut être nécessaire au fonctionnement de la charge 4. La source d'énergie renouvelable 3 adapte alors la fréquence, à une fréquence f_{B}, du signal électrique qu'elle délivre au micro réseau 1 de manière à pourvoir au besoin de puissance, P_{B}, de la charge 4.

Selon un autre cas de figure, présenté à la figure 4, entre un premier instant et un second instant la source d'énergie renouvelable 3 voit sa production de puissance diminuer. La source d'énergie renouvelable 3 ajuste sa fréquence à vide f₀ à une nouvelle fréquence à vide f_{0'} inférieure à la fréquence à vide f₀. La puissance maximale pouvant être délivrée par la source d'énergie renouvelable 3 restera inchangée, mais sera délivrée à une fréquence plus basse.

L'émulation d'un générateur virtuel par la source d'énergie renouvelable 3 permet de connecter électriquement en parallèle cette dernière avec une source d'énergie synchrone 2.

En outre, dans de telles conditions, la source d'énergie renouvelable 3 peut, comme le ferait une source d'énergie synchrone 2, former le réseau (« Grid Forming » selon la terminologie Anglo-Saxonne). Par former le réseau, nous entendons alimenter le réseau avec une puissance électrique sans avoir recours à un signal électrique de référence délivré par une autre source.

Ainsi, les sources d'énergie synchrone 2 et les sources d'énergie renouvelable 3 peuvent être connectées en parallèle et délivrer un signal électrique au micro réseau 1 de même fréquence.

De manière particulièrement avantageuse, la source d'énergie renouvelable 3 peut comprendre un système d'accumulation de puissance, par exemple un système capacitif tel qu'un supercondensateur, ou un volant d'inertie.

Toujours de manière avantageuse, le système de production d'électricité renouvelable et le système d'accumulation de puissance sont connectés électriquement à l'onduleur.

A l'inverse, lorsque le système de production d'électricité renouvelable produit un surplus de puissance non consommé par le micro réseau 1, ledit surplus peut avantageusement être emmagasiné dans le système d'accumulation d'énergie.

Toujours de manière avantageuse, le système d'accumulation de puissance peut également servir de réserve de puissance et/ou d'énergie.

Nous allons maintenant décrire le fonctionnement d'un micro réseau 1 comprenant une source d'énergie synchrone 2 et une source d'énergie renouvelable 3 émulant un générateur virtuel telle que décrite précédemment.

La source d'énergie renouvelable 3 et la source d'énergie synchrone 2 sont électriquement connectées en parallèle au micro réseau 1.

La source d'énergie renouvelable 3 est adaptée pour délivrer au micro réseau 1 une première puissance active/réactive contrôlée par statisme selon la fréquence et la tension du signal électrique du micro réseau 1.

La source d'énergie synchrone 2 et la source d'énergie renouvelable 3, électriquement connectées en parallèle, présentent avantageusement le même statisme, par exemple une pente décroissante comprise entre 1 et 5 %, préférentiellement entre 1,5 et 3 %.

De manière particulièrement avantageuse, la fréquence et la tension du signal électrique susceptible d'être délivré par les sources d'énergie renouvelable 3 et synchrone 2 sont mesurées en permanence.

Toujours de manière avantageuse, la mesure de la fréquence et de la tension sont exécutées par la source d'énergie synchrone 2.

La fréquence peut être mesurée sur le signal électrique du micro réseau par la source d'énergie synchrone 2.

La fréquence peut également être mesurée par une image de la vitesse de rotation de l'arbre de la source d'énergie synchrone 2.

La mesure de la fréquence et de la tension est également exécutée par la source d'énergie renouvelable 3.

La source d'énergie renouvelable 3 délivre au micro réseau 1 une première puissance active/réactive.

La fréquence du signal électrique délivré par la source d'énergie renouvelable 3 est contrôlée par statisme selon la puissance active consommée par le micro réseau 1.

La tension du signal électrique délivré par la source d'énergie renouvelable 3 est contrôlée par statisme selon la puissance réactive consommée par le micro réseau 1. La source d'énergie synchrone 2 est adaptée pour délivrer au micro réseau 1 une seconde puissance active/réactive.

Plus particulièrement, la source d'énergie renouvelable 3 peut être la seule source d'énergie à délivrer un signal électrique au micro réseau 1. Par être seule à délivrer un signal électrique, nous entendons une seule source d'énergie renouvelable connectée sur le micro réseau 1, ou la source d'énergie renouvelable 3 est la seule, parmi une pluralité de sources d'énergie, à délivrer un signal électrique au micro réseau 1. A cette condition, la fréquence et la tension du signal électrique sont dépendantes de la puissance consommée par le micro réseau 1 (ou plus particulièrement la charge 4).

En cas de pluralité de sources d'énergie renouvelable 3 délivrant un signal électrique au micro réseau, lesdites sources vont se partager la charge 4. A cet égard prenons le cas d'une première source d'énergie renouvelable et d'une seconde source d'énergie renouvelable. La première et la seconde source d'énergie renouvelable délivrent un signal électrique de même fréquence et de même tension, et se partagent la charge 4.

Par partager la charge 4, nous entendons la somme des puissances actives/réactives délivrées par la première et la seconde source d'énergie renouvelable est égale à la puissance active/réactive consommée par ladite charge 4. Ce comportement est le même que celui illustré à la figure 2c et relatif à deux sources d'énergie synchrone 2.

Il arrive, également, que la puissance active/réactive délivrée par une source d'énergie renouvelable 3, par exemple la première source d'énergie renouvelable, nécessite un réajustement à la baisse, par exemple un réajustement dû à une production plus faible. Le première source d'énergie renouvelable est alors contrainte de baisser la fréquence et/ou la tension à vide pour rendre compte de son nouvel état. En contrepartie, la seconde source d'énergie renouvelable peut être en mesure de combler la carence de la première source d'énergie renouvelable de sorte la somme des puissances fournie par les deux sources d'énergie renouvelable soit égale à la puissance consommée par la charge. La seconde source d'énergie renouvelable peut combler la carence de la première source en augmentant sa fréquence et/ou tension à vide, ou abaisser la fréquence et/ou tension de fonctionnement. Ce raisonnement peut être généralisé à plus de deux sources d'énergie renouvelable.

La production de la seconde puissance active/réactive est soumise à un critère de démarrage/interruption de la production de ladite seconde puissance active/réactive par la source d'énergie synchrone 2.

Le critère de démarrage de la production de la seconde puissance active/réactive est basée sur la mesure de la fréquence et de la tension du signal électrique alimentant le micro réseau 1.

Considérant dans un premier temps que le micro réseau 1 n'est alimenté que par la première puissance. Autrement dit, la source d'énergie synchrone 2 ne produit pas de puissance électrique. Supposons qu'un surplus de puissance active soit nécessaire au fonctionnement de la charge 4 du micro réseau 1. Le surplus de puissance active nécessaire au fonctionnement de la charge 4 peut être due à une augmentation de la consommation de puissance de la charge 4 (voir figure 3) et/ou une variation (diminution) de la puissance disponible produite par la source d'énergie renouvelable 3 (voir figure 4). La source d'énergie renouvelable 3 adapte alors la fréquence du signal électrique qu'elle délivre pour équilibrer la première puissance active avec la puissance active consommée par la charge 4. Ainsi la fréquence du signal électrique diminue.

Le surplus de puissance active consommé par la charge 4 peut être fourni par le système de production d'électricité renouvelable ou par le système d'accumulation de puissance. Le surplus de puissance consommée par la charge 4 du réseau peut également dépasser la production de puissance de la source d'énergie renouvelable 3. La source d'énergie synchrone 2 est donc prévue pour pallier à une surconsommation en puissance active de la charge 4 que la source d'énergie renouvelable 3 ne peut délivrer.

Ainsi, selon la présente invention, nous définissons une valeur de fréquence seuil du signal électrique en-dessous de laquelle la source d'énergie synchrone 2 démarre la production de la seconde puissance active et la délivre au micro réseau 1.

La fréquence seuil peut être définie comme la fréquence à partir de laquelle le système de production d'électricité renouvelable délivre une puissance active supérieure à 50 % par exemple, ou encore supérieure à 70 % par exemple de la puissance qu'il produit. La réserve de 50 % (ou de 30 %) de puissance produite par le système de production d'électricité renouvelable constitue alors une marge de sécurité. L'onduleur de la source d'énergie renouvelable 3 peut être paramétré par des techniques connues de l'homme du métier pour que la source d'énergie renouvelable 3 délivre un signal d'une fréquence inférieure à la fréquence seuil dès lors que le système de production d'électricité renouvelable délivre une puissance active supérieure à 50 % par exemple, ou encore supérieure à 70 %, par exemple, de la puissance qu'il produit.

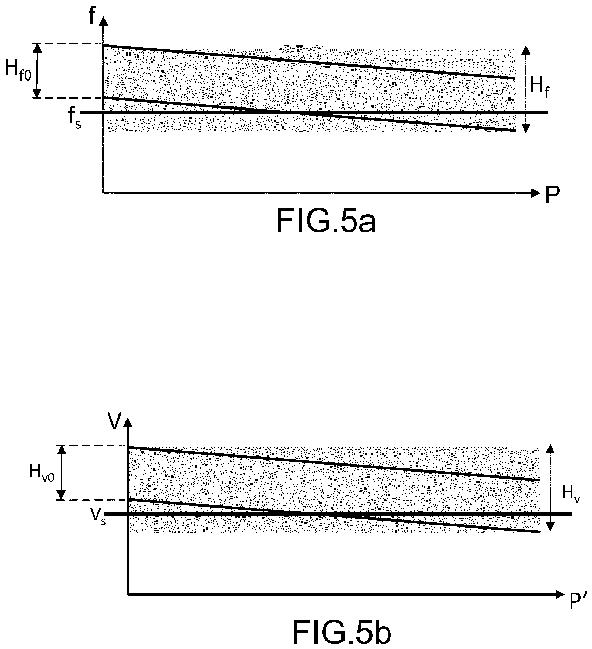

De manière alternative et avantageuse, la source d'énergie renouvelable 3 comprend un système d'accumulation de puissance. Le système d'accumulation de puissance comprend une réserve d'énergie. Dans le cas d'un système d'accumulation de puissance comprenant un supercondensateur, la réserve d'énergie prend la forme d'un état de charge. L'onduleur est adapté pour être programmé pour ajuster automatiquement la fréquence du signal électrique délivré au micro réseau 1 en fonction de différents critères tels que la réserve d'énergie dont il dispose, la production de puissance possible à l'instant t, les prévisions sur la production ou encore les prévisions météorologiques. Par ailleurs, l'onduleur est adapté pour que la fréquence à vide f₀ soit comprise dans une gamme de fréquences à vide prédéterminée H_{f0}, de sorte que la fréquence résultante du fonctionnement soit également comprise dans une gamme de fréquences prédéterminée H_{f}. Par exemple, la gamme de fréquences à vide prédéterminée H_{f0} est imposée par un exploitant du micro réseau 1. Tel qu'illustré à la figure 5a, La gamme de fréquences prédéterminée H_{f} répond ainsi à une spécification de réseau (« grid code » selon la terminologie Anglo-Saxonne). La fréquence à vide f₀ est alors contrainte dans une plage plus restreinte H_{f0}, pour garantir que la fréquence (même à pleine charge) reste dans la gamme de fréquence H_{f} admissible, avec éventuellement une marge de sécurité. Ainsi, si la réserve de puissance de la source d'énergie renouvelable diminue, la fréquence à vide f₀ diminue également. La fréquence seuil fₛ n'est pas nécessairement atteinte (si la puissance fournie est trop faible par exemple), et la ou les sources d'énergie synchrone 2 ne sont pas démarrées tant que ce n'est pas nécessaire. Modifier la fréquence volontairement n'implique pas obligatoirement de franchir à la baisse la fréquence seuil.

La fréquence seuil fₛ peut ainsi être définie comme la fréquence en dessous de laquelle l'exploitant considère que la réserve de puissance active n'est plus suffisante pour garantir la stabilité du réseau. Le critère peut être fixé par l'exploitant et ou le concepteur du micro réseau 1. L'exploitant du micro réseau peut alors imposer que la réserve de puissance active soit toujours supérieure à une puissance active seuil.

La réserve de puissance active seuil peut avantageusement être définie comme la puissance active devant être délivrée au micro réseau pendant la phase de démarrage, d'une durée T, de la source d'énergie synchrone 2. Plus particulièrement, la réserve de puissance active seuil peut être définie comme un pourcentage de la charge 4 maximale qu'il peut y avoir sur le micro réseau 1. La source d'énergie synchrone 2 est quant à elle configurée pour démarrer dès lors que la fréquence du signal électrique du micro réseau 1 franchit à la baisse la fréquence seuil.

De manière équivalente, supposons qu'un surplus de puissance réactive soit nécessaire au fonctionnement de la charge 4 du micro réseau 1. La source d'énergie renouvelable 3 adapte alors la tension du signal électrique qu'elle délivre pour équilibrer la première puissance réactive avec la puissance réactive consommée par la charge 4. Ainsi la tension du signal électrique diminue.

Le surplus de puissance réactive consommé par la charge 4 peut être fourni par le système de production d'électricité renouvelable ou par le système d'accumulation de puissance. Le surplus de puissance réactive consommée par la charge 4 du réseau peut dépasser également la production de puissance réactive de la source d'énergie renouvelable 3. La source d'énergie synchrone 2 est donc prévue pour pallier à une surconsommation en puissance réactive de la charge 4 que la source d'énergie renouvelable 3 ne peut délivrer.

Ainsi, selon la présente invention, nous définissons une valeur de tension seuil du signal électrique en-dessous de laquelle la source d'énergie synchrone 2 démarre la production de la seconde puissance réactive et la délivre au micro réseau 1.

La tension seuil peut être défini comme la tension à partir de laquelle le système de production d'électricité renouvelable délivre une puissance réactive supérieure à 50 % par exemple, ou encore supérieure à 70 % par exemple de la puissance qu'il produit.

La réserve de 50 % (ou de 30 %) de puissance produite par le système de production d'électricité renouvelable constitue alors une marge de sécurité. L'onduleur de la source d'énergie renouvelable 3 peut être paramétré par des techniques connue de l'homme du métier pour que la source d'énergie renouvelable 3 délivre un signal d'une tension inférieure à la fréquence seuil dès lors que le système de production d'électricité renouvelable délivre une puissance réactive supérieure à 50 % par exemple, ou encore supérieure à 70%, par exemple, de la puissance qu'il produit.

De manière alternative et avantageuse, la source d'énergie renouvelable 3 comprend un système d'accumulation de puissance. L'onduleur est adapté pour être programmé pour ajuster automatiquement la tension du signal électrique délivré au micro réseau 1 en fonction de différents critères tels que la réserve d'énergie dont il dispose, la production de puissance possible à l'instant t, les prévisions sur la production ou encore les prévisions météorologiques. Par ailleurs, l'onduleur est adapté pour que la tension à vide V₀ soit comprise dans une gamme de tensions à vide prédéterminée Hᵥ₀, de sorte que la tension résultante du fonctionnement soit également comprise dans une gamme de tension prédéterminée Hᵥ. Par exemple, la gamme de valeurs de tension à vide prédéterminée est imposée par un exploitant du micro réseau 1. Tel qu'illustré à la figure 5b, la gamme de tension Hv répond ainsi à une spécification de réseau. La tension à vide V₀ est alors contrainte dans une plage plus restreinte Hᵥ₀, pour garantir que la tension (même à pleine charge) reste dans la gamme de tension Hv admissible, avec éventuellement une marge de sécurité.

Ainsi, si la réserve diminue, la tension à vide V₀ diminue également. La tension seuil Vₛ n'est pas nécessairement atteinte (si la puissance réactive fournie est trop faible par exemple), et la ou les sources d'énergie synchrone 2 ne sont pas démarrées tant que ce n'est pas nécessaire. Modifier la tension volontairement n'implique pas obligatoirement de franchir à la baisse la tension seuil. La tension seuil Vₛ peut ainsi être définie comme la tension en dessous de laquelle l'exploitant considère que la réserve de puissance réactive n'est plus suffisante pour garantir la sécurité du réseau. Le critère peut ainsi être fixé par l'exploitant et/ou le concepteur du micro réseau 1. L'exploitant du micro réseau 1 peut alors imposer que la réserve de puissance réactive soit toujours supérieure à une puissance réactive seuil. La réserve de puissance réactive seuil peut avantageusement être définie comme la puissance réactive devant être délivrée au micro réseau pendant la phase de démarrage, d'une durée T, de la source d'énergie synchrone 2. Plus particulièrement, la réserve de puissance réactive seuil peut être définie comme un pourcentage de la charge 4 maximale qu'il peut y avoir sur le micro réseau 1.

La source d'énergie synchrone 2 est quant à elle configurée pour démarrer dès lors que la tension du signal électrique du micro réseau 1 franchit à la baisse la tension seuil.

Ainsi, la source d'énergie synchrone 2 démarre la production de la seconde puissance active/réactive dès lors que la fréquence et/ou la tension du signal électrique du micro réseau 1 est inférieure, respectivement, à la fréquence seuil et à la tension seuil.

Inversement, la charge 4 peut réduire sa consommation de puissance active/réactive de sorte que la puissance active/réactive fournie par la source d'énergie renouvelable 3 serait suffisante pour faire fonctionner le micro réseau 1 de manière stable.

Selon l'invention nous définissons alors une puissance active/réactive seuil, consommée par la charge 4, en-dessous de laquelle la source d'énergie synchrone 2 interrompt la production de la seconde puissance active/réactive.

Dès lors que la puissance active au micro réseau 1 est inférieure à une valeur de puissance active seuil, la source d'énergie synchrone 2 interrompt sa production de seconde puissance active.

La puissance active/réactive seuil est prédéterminée et est paramétrée dans un système de contrôle de la source d'énergie synchrone 2 par des techniques connues de l'homme du métier.

Ainsi, selon l'invention, la source d'énergie synchrone 2 peut démarrer ou interrompre la production de la seconde puissance active/réactive en fonction des besoins de consommation de la charge 4 du micro réseau 1 sans nécessiterde communication entre les sources d'énergie renouvelable 3 et d'énergie synchrone 2 ou lorsque la communication est défectueuse. Le démarrage et l'interruption de la production de la seconde puissance active/réactive sont uniquement basés sur la mesure par la source d'énergie synchrone 2 de la tension, la fréquence et la puissance active/réactive du signal sur le micro réseau 1.

Ainsi, selon l'invention, il est possible de privilégier la production de puissance par la source d'énergie renouvelable 3. Autrement dit, la source d'énergie synchrone 2 ne démarre la production de la seconde puissance que lorsque la première puissance n'est plus suffisante, ou risque de ne plus être suffisante pour faire fonctionner la charge 4.

Par exemple, une source d'énergie renouvelable 3 comprenant un système de production d'électricité renouvelable, par exemple un système d'énergie photovoltaïque, ne fonctionne pas la nuit, et est avantageusement complétée par un groupe électrogène pour assurer une continuité de la production d'électricité. Par ailleurs, lors d'un pic de consommation de puissance active/réactive par la charge 4, la première puissance délivrée par la source d'énergie renouvelable 3 peut devenir insuffisante. La source d'énergie synchrone 2, selon les critères établis par la présente invention, peut démarrer la production de la seconde puissance active/réactive et permettre d'atteindre un équilibre entre puissance produite par les sources d'énergie et la puissance consommée par la charge 4.

La présente invention n'est pas limitée à une source d'énergie renouvelable 3, et peut comprendre une pluralité de sources d'énergie renouvelable 3 émulant un générateur virtuel. Les sources d'énergie renouvelable 3 présentent un contrôle par statisme en fréquence et en tension des puissances active et réactive, de sorte que les sources d'énergie renouvelable 3 se partagent la charge 4 (« load sharing » selon la terminologie Anglo-Saxonne). La pluralité de sources d'énergie renouvelable 3 est configurée pour délivrer la première puissance au micro réseau 1.

L'invention peut également comprendre une pluralité de sources d'énergie synchrone 2, électriquement connectées en parallèle au micro réseau 1.

Ainsi, de manière avantageuse, la taux de pénétration des énergies renouvelable peut excéder la limite des 30 %. Grâce aux concepts introduits dans la présente invention, les sources d'énergie renouvelable peuvent être dimensionnées pour assurer 100 % de la consommation en puissance de la charge 4. En effet, lorsque toutes les conditions sont réunies pour que les sources d'énergie renouvelable produisent de manière suffisante (par conditions réunies, on entend ensoleillement suffisant pour les panneaux photovoltaïques, vent suffisant pour les éoliennes) la puissance consommée par la charge 4, la mise en route des sources d'énergie synchrone 2 n'est pas nécessaire. Les systèmes d'accumulation de puissance compris dans chaque source d'énergie renouvelable 3 permettent alors de pallier aux fluctuations de la puissance produite par les sources d'énergie renouvelable et ainsi assurer une stabilité du signal électrique délivré sur le micro réseau 1. Par ailleurs, les systèmes d'accumulation de puissance permettent également de pallier au caractère intermittent desdites sources d'énergie renouvelable 3. En effet, dès lors que la production de la puissance électrique fournie par les système de production d'électricité renouvelable chute à une valeur inférieure aux besoins de la charge 4, les systèmes d'accumulation de puissance peuvent prendre le relais pendant une première durée. La première durée peut être alors mise à profit pour le démarrage de la ou des sources d'énergie synchrone 2, et l'atteinte d'un régime permanent.

De manière particulièrement avantageuse, le système d'accumulation de puissance peut délivrer de la puissance active/réactive au micro réseau 1 pour compenser des fluctuations de puissance produite par la source d'énergie renouvelable sans avoir à démarrer une source d'énergie synchrone 2. La production seule ne suffisait peut être pas, mais le système d'accumulation peut ajouter une certaine puissance. Dès lors que la production devient un peu supérieure à la consommation de la charge 4 (à cause des fluctuations), le système d'accumulation se recharge et pourra être à nouveau utilisé sans atteindre l'état de charge minimal impliquant une baisse du paramètre f₀.

Le micro réseau 1 est avantageusement dépourvu de système de communication entre les différentes sources de production d'énergie, et peut être contrôlé de manière complètement automatique.

L'invention est également particulièrement avantageuse dès qu'un système de communication existe entre la source d'énergie synchrone 2 et la source d'énergie renouvelable 3, mais que ce dernier est défectueux. En effet, le procédé selon l'invention peut être une solution de secours permettant un fonctionnement en marche dégradée tout en gardant des gains économiques plus importants grâce à la possibilité de favoriser les sources d'énergie renouvelable 3 au regard d'un système de communication défaillant.

Les sources d'énergie renouvelable 3 et les sources d'énergie synchrone 2 peuvent également être distantes.

## Revendications

1. Procédé de contrôle d'un micro réseau (1) de distribution électrique comprenant au moins une source d'énergie renouvelable (3), délivrant au micro réseau (1) une première puissance active/réactive contrôlée par statisme selon une fréquence et une tension du micro réseau (1) respectivement,
une fréquence et/ou une tension délivrées étant en dessous d'une fréquence seuil et/ou tension seuil dès lors que la source d'énergie renouvelable délivre une puissance supérieure à une marge de sécurité,
la source d'énergie renouvelable étant (3) adaptée pour fonctionner de manière synchrone et en parallèle avec au moins une source d'énergie synchrone (2), la source d'énergie synchrone (2) étant adaptée pour produire une seconde puissance active/réactive, également délivrée au micro réseau (1), selon un critère de démarrage/interruption, automatique, de ladite source d'énergie synchrone (2),
le procédé comprenant le démarrage de la source synchrone dès lors que la fréquence et/ou la tension du micro réseau (1) sont inférieures à, respectivement, la fréquence seuil et/ou la tension seuil, et l'interruption de la source d'énergie synchrone (2) dès lors que la seconde puissance est inférieure à une puissance seuil.

2. Procédé selon la revendication 1, dans lequel la source d'énergie renouvelable (3) comprend un onduleur adapté pour émuler le fonctionnement d'une source d'énergie synchrone, de sorte que la source d'énergie renouvelable se comporte comme une source d'énergie synchrone.

3. Procédé selon la revendication 2, dans lequel la fréquence seuil et la tension seuil sont paramétrées dans un programme d'ordinateur contrôlant la source d'énergie synchrone (2).

4. Procédé selon l'une des revendications 1 à 3, dans lequel le contrôle par statisme en fréquence et en tension est caractérisé, respectivement, par une fréquence à vide f₀ et une tension à vide V₀, la fréquence à vide f₀ et la tension à vide V₀ étant susceptible d'être comprises, respectivement, dans une gamme de fréquence à vide H_{f0} prédéterminée et une gamme de tension à vide Hᵥ₀ prédéterminées.

5. Procédé selon l'une des revendications 1 à 4, dans lequel la source d'énergie renouvelable comprend un système d'accumulation de puissance comprenant une réserve d'énergie, ledit système étant destiné à délivrer de la puissance active/réactive au micro réseau (1).

6. Procédé selon la revendication 2 ou 3, dans lequel l'onduleur ajuste la fréquence et/ou la tension du signal délivré au micro réseau (1) en fonction d'une réserve d'énergie et / ou de puissance de la source d'énergie renouvelable (3)

7. Procédé selon le revendication 6, dans lequel l'onduleur ajuste également la fréquence et / ou la tension du signal délivré au micro réseau (1) en fonction de prévisions météorologique et /ou de prévision de consommation d'énergie.

8. Procédé selon l'une des revendications 1 à 7, dans lequel la fréquence et la tension du micro réseau (1) sont mesurées en permanence par la source d'énergie synchrone (2).

9. Procédé selon l'une des revendications 1 à 8, dans lequel la au moins une source d'énergie renouvelable (3) comprend une pluralité d'unités d'énergies renouvelable, la pluralité d'unités d'énergies renouvelable se partageant la production de la première puissance, et fonctionnant de manière synchrone.

10. Procédé selon l'une des revendications 1 à 9, dans lequel la au moins une source d'énergie synchrone (2) comprend une pluralité de sources d'énergie synchrone.

## Patentansprüche

1. Verfahren zur Steuerung eines elektrischen Mikro-Verteilnetzes (1), das mindestens eine erneuerbare Energiequelle (3) umfasst, die dem Mikro-Netz (1) eine erste Wirk-/Blindleistung liefert, die statisch gemäß einer Frequenz bzw. einer Spannung des Mikro-Netzes (1) gesteuert wird,
wobei eine gelieferte Frequenz und/oder eine gelieferte Spannung unter einer Schwellenfrequenz und/oder Schwellenspannung liegt, sobald die erneuerbare Energiequelle eine Leistung liefert, die größer als eine Sicherheitsmarge ist,
wobei die erneuerbare Energiequelle (3) geeignet ist, synchron und parallel mit mindestens einer synchronen Energiequelle (2) zu arbeiten, wobei die synchrone Energiequelle (2) geeignet ist, gemäß einem automatischen Start/Stopp-Kriterium der synchronen Energiequelle (2) eine zweite Wirk-/Blindleistung zu erzeugen, die ebenfalls dem Mikro-Netz (1) geliefert wird,
wobei das Verfahren das Starten der synchronen Quelle, sobald die Frequenz und/oder die Spannung des Mikro-Netzes (1) kleiner sind als die Schwellenfrequenz bzw. die Schwellenspannung, und das Stoppen der synchronen Energiequelle (2) umfasst, sobald die zweite Leistung kleiner als eine Schwellenleistung ist.

2. Verfahren nach Anspruch 1, wobei die erneuerbare Energiequelle (3) einen Wechselrichter umfasst, der geeignet ist, den Betrieb einer synchronen Energiequelle zu emulieren, sodass sich die erneuerbare Energiequelle wie eine synchrone Energiequelle verhält.

3. Verfahren nach Anspruch 2, wobei die Schwellenfrequenz und die Schwellenspannung in einem Computerprogramm parametrisiert werden, das die synchrone Energiequelle (2) steuert.

4. Verfahren nach einem der Ansprüche 1 bis 3, wobei die statische Frequenz- und Spannungssteuerung jeweils durch eine Leerlauffrequenz f₀ und eine Leerlaufspannung V₀ gekennzeichnet sind, wobei die Leerlauffrequenz f₀ und die Leerlaufspannung V₀ jeweils in einem vorbestimmten Leerlauffrequenzbereich H_{f0} und einem vorbestimmten Leerlaufspannungsbereich Hvo liegen können.

5. Verfahren nach einem der Ansprüche 1 bis 4, wobei die erneuerbare Energiequelle ein Leistungsspeichersystem umfasst, das eine Energiereserve umfasst, wobei das System dazu vorgesehen ist, dem Mikro-Netz (1) Wirk-/Blindleistung zu liefern.

6. Verfahren nach Anspruch 2 oder 3, wobei der Wechselrichter die Frequenz und/oder die Spannung des dem Mikro-Netz (1) gelieferten Signals in Abhängigkeit von einer Energie- und / oder Leistungsreserve der erneuerbaren Energiequelle (3) anpasst.

7. Verfahren nach Anspruch 6, wobei der Wechselrichter die Frequenz und/oder die Spannung des dem Mikro-Netz (1) gelieferten Signals ebenfalls in Abhängigkeit von Wettervorhersagen und/oder Energieverbrauchsvorhersagen anpasst.

8. Verfahren nach einem der Ansprüche 1 bis 7, wobei die Frequenz und die Spannung des Mikro-Netzes (1) permanent von der synchronen Energiequelle (2) gemessen werden.

9. Verfahren nach einem der Ansprüche 1 bis 8, wobei die mindestens eine erneuerbare Energiequelle (3) eine Vielzahl von erneuerbaren Energieeinheiten umfasst, wobei die Vielzahl von erneuerbaren Energieeinheiten sich die Erzeugung der ersten Leistung teilen und synchron arbeiten.

10. Verfahren nach einem der Ansprüche 1 bis 9, wobei die mindestens eine synchrone Energiequelle (2) eine Vielzahl von synchronen Energiequellen umfasst.

## Claims

1. A method for controlling an electrical distribution microgrid (1) comprising at least one renewable energy source (3), delivering to the microgrid (1) a first active/reactive power being droop-controlled according to a frequency and a voltage of the microgrid (1) respectively,
a frequency and/or a voltage delivered being below a threshold frequency and/or threshold voltage when the renewable energy source delivers a power greater than a safety margin,
the renewable energy source (3) being adapted to operate synchronously and in parallel with at least one synchronous energy source (2), the synchronous energy source (2) being adapted to produce a second active/reactive power, also delivered to the microgrid (1), according to an automatic start/interrupt criterion, of said synchronous energy source (2),
the method comprising starting the synchronous source when the frequency and/or the voltage of the microgrid (1) are less than, respectively, the threshold frequency and/or the threshold voltage, and interrupting the synchronous energy source (2) when the second power is less than a threshold power.

2. The method according to claim 1, wherein the renewable energy source (3) comprises an inverter adapted to emulate the operation of a synchronous energy source, so that the renewable energy source behaves as a synchronous energy source.

3. The method according to claim 2, wherein the threshold frequency and the threshold voltage are set in a computer program controlling the synchronous energy source (2).

4. The method according to one of claims 1 to 3, wherein the frequency and voltage droop control is characterised, respectively, by a no-load frequency f₀ and a no-load voltage Vo, the no-load frequency f₀ and the no-load voltage V₀ being likely to be comprised, respectively, in a predetermined no-load frequency range H_{f0} and a predetermined no-load voltage range Hvo.

5. The method according to one of claims 1 to 4, wherein the renewable energy source comprises a power accumulation system comprising an energy reserve, said system being intended to deliver the active/reactive power to the microgrid (1).

6. The method according to claim 2 or 3, wherein the inverter adjusts the frequency and/or the voltage of the signal delivered to the microgrid (1) as a function of an energy and/or power reserve of the renewable energy source (3).

7. The method according to claim 6, wherein the inverter also adjusts the frequency and/or the voltage of the signal delivered to the microgrid (1) as a function of weather forecasts and/or energy consumption forecast.

8. The method according to one of claims 1 to 7, wherein the frequency and the voltage of the microgrid (1) are permanently measured by the synchronous energy source (2).

9. The method according to one of claims 1 to 8, wherein the at least one renewable energy source (3) comprises a plurality of renewable energy units, the plurality of renewable energy units sharing the production of the first power, and operating synchronously.

10. The method according to one of claims 1 to 9, wherein the at least one synchronous energy source (2) comprises a plurality of synchronous energy sources.
